## Europäisches Patentamt
## European Patent Office
## Office européen des brevets

(19)

(11) Numéro de publication: **0 289 419**
**A1**

(12)
# DEMANDE DE BREVET EUROPEEN

(21) Numéro de dépôt: **88401024.0**

(22) Date de dépôt: **26.04.88**

(51) Int. Cl.4: **C 01 B 3/02**

(30) Priorité: **28.04.87 FR 8706026**

(43) Date de publication de la demande:
**02.11.88 Bulletin 88/44**

(84) Etats contractants désignés:
**AT BE DE ES GB GR IT NL SE**

(71) Demandeur: **COMPAGNIE FRANCAISE D'ETUDES ET DE CONSTRUCTION "TECHNIP"**
**170 Place Henri Régnault**
**F-92090 Paris la Défense (FR)**

(72) Inventeur: **Bourbonneux, Gérard**
**42 Avenue Albert I**
**F-92500 Rueil-Malmaison (FR)**

(74) Mandataire: **Beauchamps, Georges et al**
**Cabinet Z.Weinstein 20, avenue de Friedland**
**F-75008 Paris (FR)**

(54) Procédé de production améliorée de gaz d'ammoniac et installation pour l'éxécution de ce procédé.

(57) La présente invention concerne un procédé et une installation de production améliorée de gaz d'ammoniac.

Cette installation comprend essentiellement un réacteur (20) permettant le reformage catalytique à la vapeur et à l'air d'hydrocarbures légers, ce réacteur comprenant une zone de reformage et étant équipé d'un brûleur à faible production de suies, le gaz sortant de ce réacteur étant converti à haute et basse température (21), puis subissant une épuration en gaz carbonique (22) et une méthanation catalytique (23), ce après quoi le gaz est refroidi dans une boîte froide (24) de façon à réduire au minimum le taux de produits inertes résiduels, puis le gaz de synthèse épuré est comprimé et introduit dans une boucle de synthèse produisant de l'ammoniac particulièrement pur.

Cette installation peut être construite pour constituer une unité nouvelle et peut également servir pour le remodelage d'unités existantes.

EP 0 289 419 A1

## Description

### Procédé de production améliorée de gaz d'ammoniac et installation pour l'exécution de ce procédé

La présente invention a essentiellement pour objet un procédé de production améliorée de gaz d'ammoniac par reformage d'hydrocarbures.

Elle vise également une installation pour la mise en oeuvre de ce procédé.

Les procédés connus de production d'ammoniac par reformage peuvent être classés en trois grandes catégories : le procédé classique qui est aujourd'hui le plus couramment utilisé, le procédé dit à l'oxydation partielle, et le procédé dit autotherme à l'oxygène.

#### 1) Le procédé classique

Ce procédé permet la production de gaz de synthèse d'ammoniac à partir d'hydrocarbures légers, allant par exemple du gaz naturel au naphta et possédant un point d'ébullition voisin de 220°C.

Selon ce procédé, la matière première, c'est-à-dire les hydrocarbures légers ayant subi un prétraitement pour la sauvegarde des catalyseurs, sont soumis, dans un réacteur contenant un catalyseur, à un reformage primaire à la vapeur, et cela à une température voisine de 800°C, et à une pression comprise entre environ 25 et 35 bar.

A l'issue de ce reformage primaire, le gaz subit un reformage secondaire à l'air, au contact d'un catalyseur de réformage (température d'environ 1000°C), dans un réacteur adiabatique. On notera que la quantité d'air utilisée est telle qu'à la fin du processus de préparation du gaz de synthèse, le rapport hydrogène/azote est généralement voisin de 3.

Après ce reformage secondaire, le gaz est converti à haute température (environ 400°C) et basse température (environ 200°C) selon la réaction d'équilibre suivante :

$$CO + H_2O \rightleftharpoons CO_2 + H_2$$

Ensuite, le gaz carbonique est éliminé du gaz précédemment converti par lavage avec un solvant chimique ou physique selon le cas.

Mais le gaz ainsi épuré contient cependant un certain pourcentage résiduel de CO et CO₂ qui est trop élevé pour le catalyseur de la synthèse d'ammoniac. Aussi, pour parfaire l'épuration, le gaz subit une méthanation catalytique selon les réactions :

$$CO + 3H_2 \rightleftharpoons CH_4 + H_2O$$

$$CO_2 + 4H_2 \rightleftharpoons CH_4 + 2H_2O$$

Le gaz ainsi épuré est comprimé et finalement introduit dans une boucle de synthèse pour être converti en ammoniac.

Toutefois ce procédé classique présente un certain nombre d'inconvénients.

La pression pour préparer le gaz de synthèse est limitée par des obstacles technologiques se situant au niveau des tubes du four de reformage primaire, alors que, pour des raisons d'ordre énergétique, il serait souhaitable d'élever ladite pression.

La teneur finale en impuretés dans le gaz de synthèse (CO₂ + CO + CH₄ + gaz inertes, notamment argon) oblige, soit à augmenter la pression de la boucle de synthèse, soit à purger cette boucle, ce qui, dans les deux cas représente une perte d'énergie.

On notera encore ici que les pertes énergétiques au niveau du reforming primaire sont très significatives.

Par ailleurs, les problèmes d'entretien et de sécurité sont importants au niveau des tubes de reformage et des éléments annexes de l'installation tels que lignes de transfert, collecteur etc...

Il convient encore de remarquer que le rapport vapeur/carbone, utilisé lors du reformage primaire, est souvent compris entre 2,5 et 3,5, cette valeur étant nettement plus élevée que celle requise par la stoechiométrie du reformage. Ceci pénalise donc la consommation d'énergie et les investissements afférents.

Enfin, on notera que les impuretés contenues dans le gaz d'ammoniac après méthanation ne sont jamais inférieures à une quantité comprise entre 1 et 2º/o.

#### 2) Procédé dit à l'oxydation partielle

Selon ce procédé, la matière première utilisée ici peut varier du gaz naturel au charbon en passant par le naphta et le fuel lourd.

La matière première, après avoir subi un prétraitement variable selon sa nature, subit un seul reformage qui est un reformage thermique à l'oxygène provenant d'une unité de séparation d'air. Ce reformage s'effectue à une température comprise entre 1200 et 1400°C, et à une pression pouvant aller de quelques bar à plus de 100 bar.

A l'issue de ce reformage, le gaz subit un traitement permettant l'élimination des suies formées durant le reformage.

Puis le gaz ainsi épuré, subit une conversion à moyenne température, suivie d'un lavage par un solvant pour éliminer la plus grande partie du gaz carbonique.

Enfin, le gaz est lavé à l'azote liquide provenant de l'unité de séparation précitée, afin, d'une part, de retenir toutes les impuretés résiduelles, et d'autre part, d'obtenir un mélange stoechiométrique pour la synthèse.

Enfin le gaz est comprimé et introduit dans une boucle de synthèse pour produire du gaz d'ammoniac.

Ce procédé présente un certain nombre d'inconvénients parmi lesquels on peut citer :

La nécessité d'une unité de séparation d'air qui représente un investissement important et nécessite une consommation d'énergie notable ;

La formation de suies dont l'élimination demeure onéreuse et exige une consommation d'énergie ;

La nécessité de véhiculer de l'oxygène pur ce qui, comme on le comprend, pose des problèmes de sécurité ; et

La nécessité d'opérer à température élevée ce qui évidemment pose des problèmes technologiques.

3) Procédé dit autotherme à l'oxygène.

Là encore, la matière première peut varier du gaz naturel au naphta ayant un point final d'ébullition de 220°C.

La charge, après avoir subi le prétraitement nécessaire pour préserver les catalyseurs, subit, comme dans le procédé précédent, un reformage à l'oxygène provenant d'une unité de séparation d'air, et à la vapeur, la température étant voisine de 1000°C et la pression comprise entre 30 et 35 bar. Ce reformage s'effectue au contact d'un catalyseur contenu dans un réacteur.

Après le reformage, le gaz subit un traitement identique à celui du procédé classique, c'est-à-dire, successivement, une conversion à haute et basse température, une élimination de gaz carbonique puis une méthanation catalytique.

A ce stade, de l'azote pratiquement en phase gazeuse et provenant de l'unité de séparation d'air précitée est ajouté afin de permettre un mélange stoechiométrique de la synthèse ammoniac.

Ce mélange est enfin comprimé et introduit dans une boucle de synthèse pour produire de l'ammoniac.

Ce procédé présente lui aussi un certain nombre d'inconvénients.

Comme dans le procédé précédent, il est nécessaire d'utiliser une unité de séparation d'air ce qui est coûteux, et on doit véhiculer de l'oxygène pur sous pression, ce qui pose des problèmes de sécurité.

Par ailleurs, il convient d'opérer à une température relativement élevée, (ce qui pose des problèmes d'ordre technologique) de façon à obtenir une teneur résiduelle en méthane acceptable.

Enfin, la teneur résiduelle en produits inertes dans le gaz de synthèse demeure relativement élevée.

Aussi, la présente invention a pour but de proposer un procédé et un système de production améliorée de gaz d'ammoniac qui remédient aux inconvénients des procédés connus notamment au niveau de la teneur en produits inertes résiduels dans le gaz de synthèse, des problèmes de technologie et de sécurité, et des investissements requis.

A cet effet, l'invention a pour objet un procédé de production améliorée de gaz d'ammoniac par synthèse à partir d'hydrocarbures et du type consistant à faire subir aux hydrocarbures un reformage à la vapeur dans un réacteur contenant un catalyseur, à convertir le gaz ainsi réformé à haute température et basse température selon la réaction d'équilibre :

$$CO + H_2O \rightleftarrows CO_2 + H_2,$$ ce après quoi on élimine du gaz converti le gaz carbonique, on parfait l'épuration du gaz ainsi obtenu en lui faisant subir une méthanation catalytique et on comprime finalement le gaz épuré avant de l'introduire dans une boucle de synthèse produisant l'ammoniac, caractérisé en ce que le reformage à la vapeur des hydrocarbures est effectué en présence d'air dans un même réacteur, tandis qu'après la méthanation catalytique précitée on effectue, avant de le comprimer, un refroidissement du gaz pour en éliminer notamment l'azote excédentaire et les gaz inertes résiduaires, ce qui permet d'obtenir un gaz de synthèse particulièrement pur et ne contenant pas plus de 0,1 à 0,3% d'impuretés.

Suivant une autre caractéristique de ce procédé, le reformage précité à la vapeur et à l'air s'effectue à une température comprise entre environ 800 et 1000°C et à une pression comprise entre environ 25 et environ 120 bar.

On précisera encore ici que le reformage s'effectue dans le réacteur en minimisant la production de suies grâce à un brûleur conçu pour minimiser ladite production tout en maintenant un rapport vapeur/ carbone réduit et compris entre 1,8 et 2,5.

Suivant une autre caractéristique de ce procédé, les gaz sont débarrassés des suies par une gazéification avant de pénétrer dans la zone de reformage du réacteur précité, cette gazéification précitée s'effectuant par l'action combinée d'un catalyseur de gazéification de suies et de l'addition d'un gaz contenant de l'hydrogène provenant par exemple de la boucle de synthèse, ou étant du gaz de synthèse.

L'élimination des suies peut aussi s'effectuer grâce à un système d'élimination à sec des suies et par l'addition d'un gaz contenant de l'hydrogène provenant par exemple de la boucle de synthèse, ou étant du gaz de synthèse.

Pour obtenir l'élimination des suies, on peut parfaitement, sans sortir du cadre de l'invention, combiner les deux solutions précitées.

Suivant un mode de réalisation de ce procédé, une première partie des hydrocarbures avec vapeur subit un reformage primaire suivi d'un reformage secondaire à l'air, le gaz ainsi réformé étant converti à haute et basse température, et le gaz carbonique étant éliminé du gaz converti, ce après quoi on parfait l'épuration du gaz par méthanation catalytique, tandis qu'une deuxième partie des hydrocarbures avec vapeur subit les opérations décrites précédemment jusqu'à la méthanation catalytique, les gaz provenant des deux méthanations catalytiques étant refroidis ensemble avant de subir deux compressions indépendantes, ce après quoi les gaz comprimés sont réunis pour la synthèse de l'ammoniac.

Selon un autre mode de réalisation de ce procédé, une première partie des hydrocarbures avec vapeur subit un reformage catalytique autotherme à l'oxygène provenant d'une séparation d'air, le gaz ainsi réformé étant converti à haute et basse température et le gaz carbonique étant éliminé du gaz converti, ce après quoi on parfait l'épuration du gaz par méthanation catalytique, tandis qu'une deuxième partie des hydrocarbures avec vapeur subit les opérations décrites précédemment jusqu'à la méthanation catalytique, les gaz provenant des deux méthanations catalytiques étant refroidis ensemble avant de subir deux compressions indépendantes, ce après quoi les gaz comprimés sont réunis pour la synthèse de l'ammoniac.

L'invention vise également une installation pour la mise en oeuvre du procédé répondant à l'une ou l'autre des caractéristiques ci-dessus, cette installation étant essentiellement caractérisée en ce qu'elle comprend un réacteur catalytique autotherme à l'air et dans lequel sont introduits des hydrocarbures et de la vapeur, ledit réacteur comprenant une zone de reformage et étant équipé d'un brûleur à faible production de suies, tandis qu'une boîte froide est utilisée pour l'élimination de l'azote excédentaire et des gaz résiduaires et inertes, ladite boîte froide étant disposée à la sortie d'au moins un appareil de méthanation catalytique.

Cette boîte froide permettra avantageusement l'élimination de l'azote excédentaire par rapport au mélange stoechiométrique de la synthèse d'ammoniac et également l'élimination de tous les gaz inertes résiduaires et de la majeure partie des gaz inertes tels que notamment l'argon, de sorte qu'on obtiendra un gaz de synthèse extrêmement pur.

Mais d'autres avantages et caractéristiques de l'invention apparaîtront plus clairement dans la description détaillée qui suit et se réfère aux dessins annexés, donnés uniquement à titre d'exemple, et dans lesquels :

Les figures 1 et 2 illustrent respectivement sous la forme de schéma-blocs des installations de production d'ammoniac d'un type connu ;

La figure 3 est un schéma-bloc d'une installation conforme aux principes de l'invention ; et

Les figures 4 et 5 sont respectivement des schéma-blocs de deux modes de réalisation d'installation selon l'invention et utilisant le schéma de la figure 3 combiné d'une part avec le schéma de la figure 1, et d'autre part avec le schéma de la figure 2.

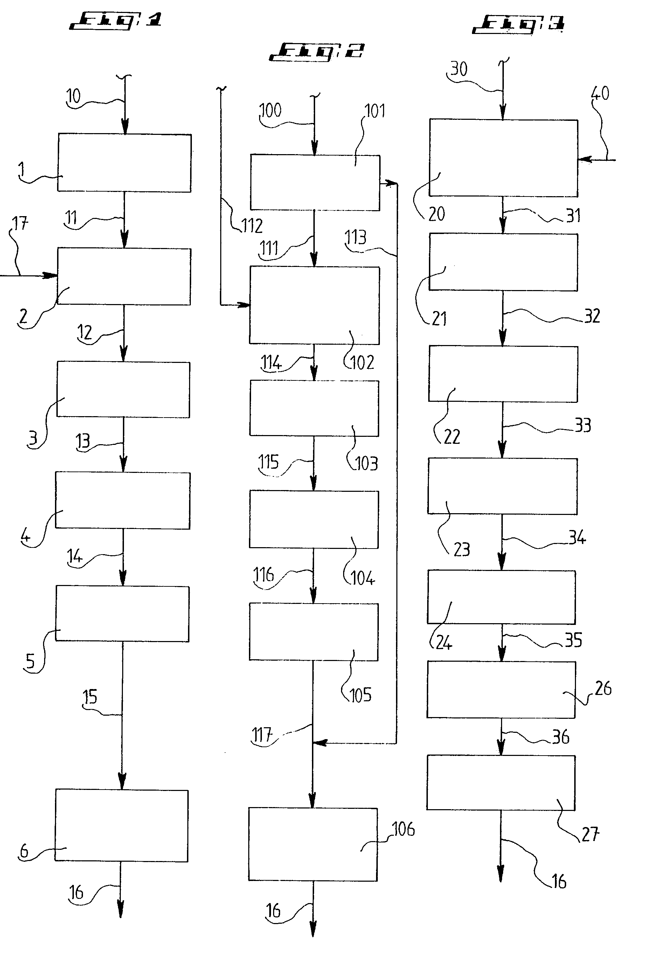

On se reportera tout d'abord à la figure 1 pour décrire le procédé classique de production d'ammoniac par reformage, tel qu'il a été évoqué au début de la présente description.

Des hydrocarbures légers sont introduits en 10 avec de la vapeur dans un réacteur 1 où ils subissent un reformage primaire. Le réacteur 1 peut être constitué par des tubes chauffés extérieurement et remplis d'un catalyseur de reformage.

Le gaz issu du réacteur 1 passe par 11 dans un deuxième réacteur adiabatique 2 contenant un catalyseur et où il subit un reformage secondaire à l'air introduit par une conduite 17.

Le gaz ainsi réformé dans le réacteur 2 passe par 12 dans un appareil 3 où il est converti à haute température et basse température, comme expliqué au début de la présente description.

Le gaz ainsi converti sort en 13 pour subir une élimination de $CO_2$ en 4 par lavage par un solvant. Le gaz ainsi épuré sort en 14 de l'appareil 4 et subit une épuration complémentaire par méthanation catalytique en 5 de façon à éliminer les quantités résiduelles de CO et $CO_2$.

Finalement, le gaz épuré sort par la conduite 15 reliée à un compresseur et une boucle de synthèse matérialisés par le bloc 6, et à la sortie de la boucle, on obtient en 16 de l'ammoniac.

Les inconvénients de ce procédé classique ont été donnés au début de la présente description et on ne les répétera pas ici.

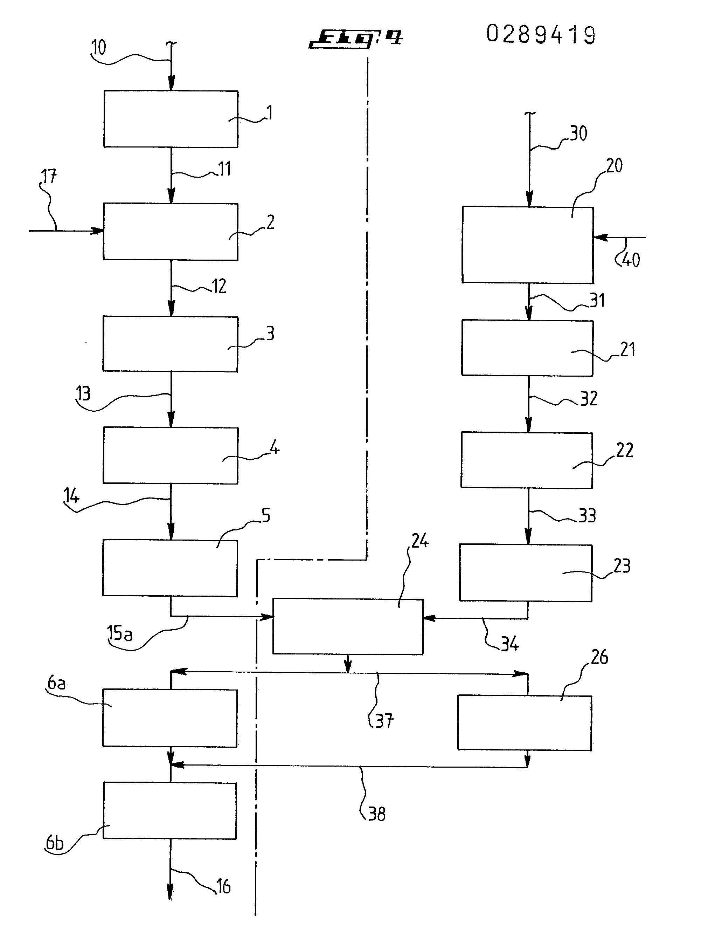

On a de même expliqué précédemment les inconvénients du procédé dit autotherme à l'oxygène qui sera maintenant brièvement décrit en se reportant à la figure 2.

De l'air est introduit en 100 dans une unité de séparation d'air 101 qui augmente le coût de l'installation, comme on l'a expliqué précédemment.

L'oxygène sortant en 111 de l'unité 101 est introduit dans un réacteur 102 contenant un catalyseur et qui reçoit par la conduite 112 la charge constituée par des hydrocarbures légers et de la vapeur, lesquels hydrocarbures subissent au contact du catalyseur dans le réacteur 102 un reformage.

Ensuite, le gaz réformé subit, comme dans le procédé classique décrit précédemment un traitement identique jusqu'à la méthanation incluse, c'est-à-dire sort du réacteur 102 en 114 pour être converti à haute et basse température en 103 d'où il sort en 115 pour subir une élimination en $CO_2$ dans l'appareil 104 d'où il sort en 116 pour subir une méthanation catalytique en 105.

Le gaz sort de l'appareil 105 par la conduite 117 ou il est mélangé avec de l'azote provenant de l'unité de séparation d'air 101 et acheminé par la ligne 113.

Le mélange est alors comprimé et introduit dans une boucle de synthèse comme matérialisé en 106 pour produire en 16 de l'ammoniac.

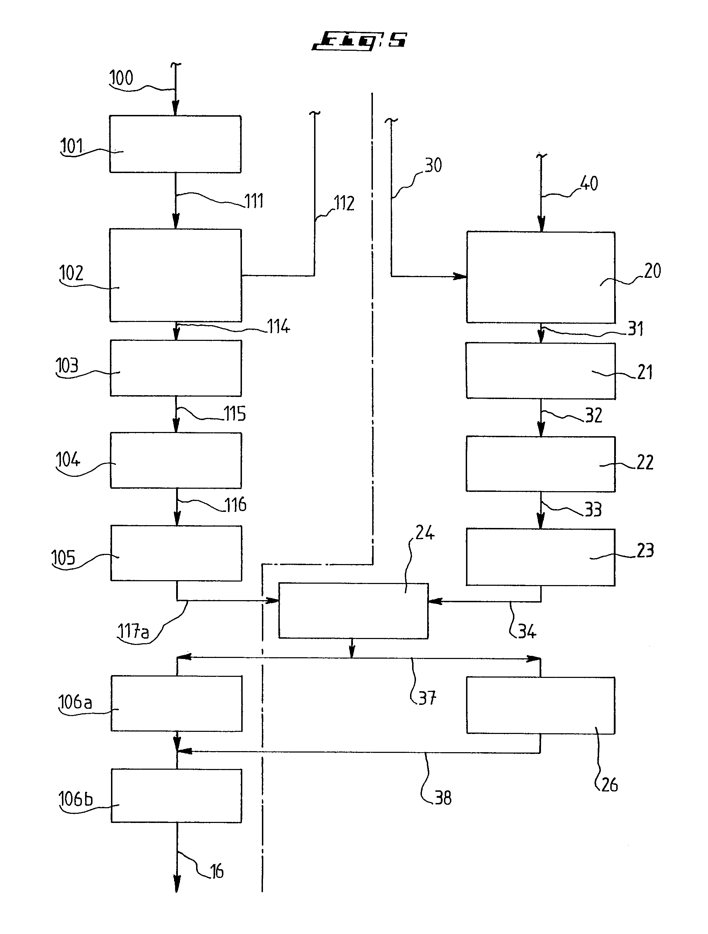

Conformément à l'invention, et comme on le voit sur la figure 3, la matière première, c'est-à-dire des hydrocarbures légers, sont introduits avec de la vapeur par la ligne 30 dans un réacteur 20 où ils subissent un reformage à la vapeur et à l'air introduit par une ligne 40. Autrement dit, on réalise, suivant l'invention, un reformage à l'aide d'un seul et même réacteur permettant un reformage de la charge à la vapeur et à l'air, sans qu'il soit nécessaire d'utiliser une unité spéciale de séparation d'air comme dans le cas du procédé connu de la figure 2, ni un reformage en deux étapes comme dans le cas du procédé classique de la figure 1.

Le reformage à la vapeur et à l'air s'effectue à une température comprise entre environ 800 et 1000°C et à une pression comprise entre environ 25 et environ 120 bar. Le réacteur 20 est équipé d'un brûleur spécialement conçu pour minimiser la production des suies et cela malgré un rapport vapeur/carbone réduit et compris entre environ 1,8 et 2,5. Bien entendu, la quantité de suies varie selon la nature de la charge traitée.

En outre, selon l'invention, les gaz peuvent être débarrassés des suies par gazéification, avant de pénétrer dans la zone de reformage du réacteur 20.

Cette gazéification s'effectue par l'action combinée d'un catalyseur de gazéification des suies et de l'addition d'un gaz contenant de l'hydrogène provenant par exemple de la boucle de synthèse, ou étant du gaz de synthèse, étant bien entendu que le volume ajouté varie selon la charge traitée.

L'élimination des suies en question peut également s'effectuer grâce à un système d'élimination à sec des suies et par l'addition d'un gaz contenant de l'hydrogène provenant par exemple de la boucle de synthèse, ou étant du gaz de synthèse.

Il convient de remarquer qu'on peut utiliser simultanément les deux solutions ci-dessus pour éliminer les suies.

Le gaz reformé et sortant en 31 du réacteur 20 subit ensuite en 21, 22 et 23 un traitement identique à celui des procédés connus et représentés sur les figures 1 et 2. En d'autres termes, le gaz subit en 21 une conversion à haute température et basse température, puis il sort en 32 pour subir en 22 une élimination de gaz carbonique, et l'épuration du gaz sortant de 22 par 33 subit une épuration complémentaire par méthanation catalytique en 23.

A ce stade, et, conformément à l'invention, le gaz sortant en 34 de la méthanation catalytique 23 est introduit dans une boîte froide 24 où l'azote excédentaire par rapport au mélange stoechiométrique de la synthèse d'ammoniac est éliminé. Il convient également de noter que grâce à la boîte froide 24, tous les gaz inertes résiduaires, tels que $CO_2$, CO et $CH_4$, ainsi que la majeure partie des gaz rares tels que l'argon, sont éliminés. On obtient par conséquent à la sortie 35 de la boîte froide 24 un gaz de synthèse très pur avec un taux d'impuretés n'excédant pas plus de 0,1 à 0, 3%, ce qui n'était pas le cas avec les procédés antérieurs.

Ce gaz de synthèse est alors comprimé en 26, dans le cas où la pression ne serait pas suffisamment élevée, et introduit par la conduite 36 dans une boucle de synthèse 27 pour produire en 16 de l'ammoniac.

Le procédé selon cette invention et qui vient d'être décrit permet avantageusement d'éliminer tous les inconvénients des procédés antérieurement connus tout en conservant leurs avantages.

C'est ainsi que la pression de la préparation du gaz de synthèse n'est pas limitée par des obstacles technologiques, comme c'était le cas antérieurement.

En outre, la teneur résiduelle en produits inertes du gaz de synthèse ($CO_2$, CO, $CH_4$, argon etc...) est très faible comme on l'a dit précédemment, ce qui conduit à une synthèse d'ammoniac très performante.

Par ailleurs, le reforming primaire que l'on trouvait dans le procédé classique est supprimé, de sorte que les consommations d'énergie et d'entretien ainsi que les problèmes de sécurité sont fortement minimisés.

Le rapport vapeur/carbone étant diminué, les coûts résultant de la consommation d'énergie et des investissements le sont également.

D'un autre côté, il convient de noter que la suppression de l'unité de séparation d'air et son remplacement par une simple boîte froide diminuent les investissements et la consommation d'énergie ainsi que les problèmes de sécurité. Enfin, il convient de remarquer que le procédé de l'invention peut accepter un taux de méthane résiduel plus élevé avant la boîte froide, et donc une température de reformage relativement faible, ce qui est favorable sur le plan énergétique et technologique.

Il convient également d'ajouter que l'élimination des suies dans le réacteur 20 est faite pratiquement sans pertes d'énergie, et que le procédé selon cette invention permet de traiter une grande variété de charges allant du gaz naturel au naphta, et cela avec les mêmes avantages.

Le procédé de l'invention tel qu'illustré sur la figure 3 peut être utilisé pour construire des unités nouvelles ou pour remodeler des unités existantes.

C'est ainsi que l'installation représentée sur la figure 4 résulte de la combinaison d'une installation classique telle que représentée sur la figure 1 avec une installation conforme aux principes de l'invention et telle que représentée sur la figure 3.

Sur la partie gauche de la figure 4, on voit le schéma classique montré sur la figure 1, jusqu'à l'étape de méthanation catalytique 5, les mêmes repères que sur la figure 1 ayant été utilisés.

Sur la partie droite de la figure 4, on voit le schéma d'une installation selon la figure 3 jusqu'à l'étape de méthanation catalytique 23, les mêmes repères que pour la figure 3 ayant été utilisés.

Bien entendu, les hydrocarbures, avec de la vapeur, sont introduits par les lignes 10 et 30 dans l'installation visible sur la figure 4.

Quant aux gaz sortant en 15a et 34 des deux méthanations catalytiques 5 et 23, ils sont introduits et refroidis ensemble dans la boîte froide 24 d'où ils sortent en 37 pour subir deux compressions indépendantes 6a et 26, ce après quoi les gaz comprimés sont réunis en 38 pour être envoyés dans une boucle de synthèse 6b et produire ainsi de l'ammoniac en 16.

L'installation visible sur la figure 5 résulte de la combinaison d'une installation selon le schéma de l'invention et visible sur la figure 3 (partie droite de la figure 5), et d'une installation dite autotherme à l'oxygène telle qu'illustrée sur la figure 2 (et visible sur la partie gauche de la figure 5).

Jusqu'à l'étape de méthanation incluse 105 et 23, on retrouve sur la figure 5 les deux schémas des figures 2 et 3, avec les mêmes repères, sauf qu'en ce qui concerne le schéma autotherme à l'oxygène (partie gauche de la figure 5), la conduite de transport d'azote 113 montrée sur la figure 2 est ici supprimée.

Les hydrocarbures et la vapeur sont évidemment introduits par les lignes 112 et 30 dans l'installation remodelée montrée sur la figure 5.

A la sortie 117a et 34 des deux méthanations catalytiques 105 et 23, les gaz sont introduits et refroidis ensemble, dans la boîte froide 24, et à la sortie de cette boîte froide, ils sont acheminés par une ligne 37 vers deux compressions indépendantes 106a, 26, ce après quoi les gaz comprimés sont réunis et parviennent par la ligne 38 dans une boucle de synthèse 106b produisant en 16 de l'ammoniac.

Les installations remodelées selon les figures 4 et 5 permettent une augmentation de la capacité et une amélioration de la consommation d'énergie. Ceci résulte du fait qu'après refroidissement en 24, le gaz de synthèse a une teneur résiduelle en gaz inertes ($CH_4$, CO, $CO_2$, argon etc...) si faible que la synthèse existante peut produire davantage d'ammoniac moyennant de faibles modifications. La capacité peut être accrue de l'ordre de 20 à 25%.

Par ailleurs, les installations ainsi remodelées permettent de réduire à la fois le temps d'arrêt de l'unité existante et celui de la mise en route de l'unité remodelée, car les interventions sur l'unité existante sont très limitées (surtout au niveau des interconnexions), tandis que lors d'un remodelage classique, toutes les étapes du procédé doivent être revues et modifiées. Enfin, on remarquera que si l'unité existante présente une surcapacité potentielle au niveau soit des conversions haute température et basse température, soit de l'élimination du $CO_2$, soit de la méthanation catalytique, cette surcapacité pourra être avantageusement exploitée en supprimant l'étape correspondante dans le schéma autotherme à l'air sur la partie droite des figures 4 et 5.

Bien entendu, l'invention n'est nullement limitée aux modes de réalisation décrits et illustrés qui n'ont été donnés qu'à titre d'exemple.

L'invention comprend donc tous les équivalents techniques des moyens décrits ainsi que leurs combinaisons si celles-ci sont effectuées suivant son esprit.

## Revendications

1. Procédé de production améliorée de gaz d'ammoniac par synthèse à partir d'hydrocarbures et du type consistant à faire subir aux hydrocarbures un reformage à la vapeur dans un réacteur contenant un catalyseur, à convertir le gaz ainsi réformé à haute température et basse température selon la réaction d'équilibre : $CO + H_2O \rightleftarrows CO_2 + H_2$, ce après quoi on élimine du gaz converti le gaz carbonique, on parfait l'épuration du gaz ainsi obtenu en lui faisant subir une méthanation catalytique et on comprime finalement le gaz épuré avant de l'introduire dans une boucle de synthèse produisant l'ammoniac, caractérisé en ce que le reformage à la vapeur des hydrocarbures est effectué en présence d'air dans un même réacteur tandis qu'après la méthanation catalytique précitée, on effectue, avant de le comprimer, un refroidissement du gaz pour en éliminer notamment l'azote excédentaire et les gaz inertes résiduaires, ce qui permet d'obtenir un gaz de synthèse particulièrement pur et ne contenant pas plus de 0, 1 à 0,3% d'impuretés.

2. Procédé selon la revendication 1, caractérisé en ce que le reformage précité à la vapeur et à l'air s'effectue à une température comprise entre environ 800 et 1000°C et à une pression comprise entre environ 25 et environ 120 bar.

3. Procédé selon la revendication 1 ou 2, caractérisé en ce que le reformage précité s'effectue dans le réacteur en minimisant la production de suies grâce à un brûleur conçu pour minimiser ladite production tout en maintenant un rapport vapeur/carbone réduit et compris entre 1,8 et 2,5.

4. Procédé selon l'une des revendications 1 à 3, caractérisé en ce qu'avant de pénétrer dans la zone de reformage du réacteur précité, les gaz sont débarrassés des suies par une gazéification s'effectuant par l'action combinée d'un catalyseur de gazéification de suies et de l'addition d'un gaz contenant de l'hydrogène provenant par exemple de la boucle de synthèse, ou étant du gaz de synthèse.

5. Procédé selon l'une des revendications 1 à 4, caractérisé en ce que les gaz sont débarrassés des suies grâce à un système d'élimination à sec des suies et par l'addition d'un gaz contenant de l'hydrogène provenant par exemple de la boucle de synthèse, ou étant du gaz de synthèse.

6. Procédé selon la revendication 1, caractérisé en ce qu'une première partie des hydrocarbures avec vapeur subit un reformage primaire suivi d'un reformage secondaire à l'air, le gaz ainsi réformé étant converti à haute et basse température, et le gaz carbonique étant éliminé du gaz converti, ce après quoi on parfait l'épuration du gaz par méthanation catalytique, tandis qu'une deuxième partie des hydrocarbures avec vapeur subit les opérations précitées et décrites dans la revendication 1 jusqu'à la méthanation catalytique, les gaz provenant des deux méthanations catalytiques étant refroidis ensemble avant de subir deux compressions indépendantes, ce après quoi les gaz comprimés sont réunis pour la synthèse de l'ammoniac.

7. Procédé selon la revendication 1, caractérisé en ce qu'une première partie des hydrocarbures avec vapeur subit un reformage catalytique autotherme à l'oxygène provenant d'une séparation d'air, le gaz ainsi réformé étant converti à haute et basse température et le gaz carbonique étant éliminé du gaz converti, ce après quoi on parfait l'épuration du gaz par méthanation catalytique, tandis qu'une deuxième partie des hydrocarbures avec vapeur subit les opérations précitées et décrites dans la revendication 1 jusqu'à la méthanation catalytique, les gaz provenant des deux méthanations catalytiques étant refroidis ensemble avant de subir deux compressions indépendantes, ce après quoi les gaz comprimés sont réunis pour la synthèse de l'ammoniac.

8. Installation pour la mise en oeuvre du procédé selon l'une des revendications précédentes, caractérisée en ce qu'elle comprend un réacteur (20) de reformage catalytique autotherme à l'air et dans lequel sont introduits des hydrocarbures et de la vapeur, ledit réacteur comprenant une zone de reformage et étant équipé d'un brûleur à faible production de suies, tandis qu'une boîte froide (24) est utilisée pour l'élimination de l'azote excédentaire et des gaz résiduaires et inertes, ladite boîte froide étant disposée à la sortie (34) d'au moins un appareil (23, 5, 105) de méthanation catalytique.

0289419

Fig. 1

Fig. 2

Fig. 3

Fig. 4     0289419

Fig. 5

0289419

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-2 126 573  (HUMPHREYS & GLASGOW LTD) <br> * Page 1, lignes 23-44,79-86; page 2, lignes 38-50,54,55,64-70 * <br> --- | 1,8 | C 01 B   3/02 |
| Y | EP-A-0 212 889  (I.C.I.) <br> * Page 4, lignes 3-5,20-30; page 19, lignes 1-20 * <br> --- | 1-3,8 | |
| Y | CHEMICAL ABSTRACTS, vol. 96, no. 10, mars 1982, page 141, résumé no. 71284p, Columbus, Ohio, US; & ES-A-494 489 (FOSTER WHEELER IBERIA S.A.) 01-09-1981 <br> * En entier * <br> --- | 1 | |
| Y | DE-A-2 948 107  (DIDIER ENGINEERING) <br> * Page 8; figure 2 * <br> --- | 1,2,8 | |
| A | WO-A-8 600 286  (STAMICARBON B.V.) <br> --- | | |
| A | EP-A-0 113 530  (AIR PRODUCTS AND CHEMICALS) <br> ----- | | **DOMAINES TECHNIQUES RECHERCHES (Int. Cl.4)** <br><br> C 01 B |

Le présent rapport a été établi pour toutes les revendications

| Lieu de la recherche | Date d'achèvement de la recherche | Examinateur |
|---|---|---|
| LA HAYE | 21-06-1988 | VAN BELLINGEN I.C.A. |